# EUROPÄISCHE PATENTANMELDUNG

(11) **EP 3 812 938 A1**
(43) Veröffentlichungstag der Anmeldung: **28.04.2021**
(21) Anmeldenummer: 19205079.7
(22) Anmeldetag: 24.10.2019
(51) Int. Cl.: G06F 21/57, G06F 21/76

(54) **REKONFIGURATION EINER HARDWAREKOMPONENTE EINES TECHNISCHEN GERÄTS**

(71) Anmelder: Siemens Aktiengesellschaft, 80333 München (DE)
(72) Erfinder: De Santis, Fabrizio, 80634 München (DE); Dichtl, Markus, 89231 Neu-Ulm (DE); Schneider, Daniel, 80796 München (DE); Sel, Tolga, 81379 München (DE); Zeschg, Thomas, 81543 München (DE)

(57) **Zusammenfassung**

Die Erfindung gibt ein Verfahren zur Rekonfiguration einer Hardwarekomponente (FPGA) eines technischen Geräts (ID), wobei die Hardwarekomponente (FPGA) mindestens ein rekonfigurierbares feldprogrammierbares Modul (PRR1, PRR2) aufweist und wobei das Modul (PRR1, PRR2) Schnittstellen (2, 3, 4, 5, 6) zu weiteren Komponenten aufweist an. Das Verfahren weist die folgenden Schritte auf:
- ein Sperren (S1) mindestens einer Schnittstelle (3, 4, 5, 6) durch eine Firewall (FW),
- ein Rekonfigurieren (S2) des Moduls (PRR1, PRR2), wobei bei dem Rekonfigurieren (S2) eine Hardware-Applikation auf dem Modul (PRR1, PRR2) installiert oder aktualisiert wird,
- ein Prüfen (S3) der Hardware-Applikation und
- in Abhängigkeit von Ergebnissen des Prüfens (S3) entweder ein Aufheben (S4a) oder ein Beibehalten (S4b) des Sperrens (S1) von mindestens einer Schnittstelle (3, 4, 5, 6) durch die Firewall (FW).

Außerdem gibt die Erfindung eine Hardwarekomponente (FPGA) eines technischen Geräts (ID) an.

## Beschreibung

### HINTERGRUND DER ERFINDUNG

### Gebiet der Erfindung

Die vorliegende Erfindung betrifft ein Verfahren zur Rekonfiguration einer Hardwarekomponente (FPGA) eines technischen Geräts (ID). Außerdem gibt die Erfindung eine Hardwarekomponente (FPGA) eines technischen Geräts (ID) an.

### Beschreibung des Stands der Technik

Die Entlastung der CPU durch Auslagerung rechenintensiver Aufgaben in dafür spezialisierte Hardware (Grafikkarten, Audio- und Videodekodierung, Hardware-Beschleuniger für neuronale Netze, ...) ist Stand der Technik und maßgeblich für die Performance von industriellen Geräten. Aufgrund der wachsenden Komplexität und der zunehmenden Vernetzung von Systemen, werden die unterschiedlichsten Aufgaben parallel auf derselben Hardware ausgeführt. Durch den Einsatz von "Partial Reconfiguration" kann ein Teil eines rekonfigurierbaren Digitalbausteins (FPGA, ASIC mit embedded FPGA, CPLD) zur Laufzeit neu konfiguriert werden. Dies ermöglicht den Einsatz von Apps, wie sie von Mobiltelefonen bereits bekannt sind, auch auf Hardware Ebene (HW-App / Hardware-Applikation). Außerdem kann durch solch einer partiellen Rekonfiguration zur Laufzeit ein Update, z.B. einer App oder eines Algorithmus, gemacht werden.

Bei aktuellen FPGA-Technologien werden Module, die anhand "Partial Reconfiguration" auf das FPGA geladen werden, sofort aktiv und ansprechbar. Sollte ein Update während der partiellen Rekonfiguration abbrechen, bleibt die geladene Teilkonfiguration trotzdem vorhanden. Dies kann sowohl zu einer Funktionsstörung des FPGA (Denial-of-Service Angriff) als auch zu einem Informations- bzw. Entropieverlust eines Geheimschlüssels führen.

Speziell für Hardware-Blöcke, die sicherheitskritische Funktionen ausführen, ist es unabdingbar sicherzustellen, dass der gesamte Block bzw. das komplette Update bei der Rekonfiguration korrekt geladen wurde, bevor die Kommunikation mit dem Block möglich ist. Dies gilt insbesondere für kryptographische Verfahren, die auf der Geheimhaltung eines geheimen Schlüssels beruhen. Falls das Update während der partiellen Rekonfiguration abbricht und somit nur eine Teilkonfiguration geladen wurde, ist der geheime Schlüssel möglicherweise nicht mehr ausreichend geschützt und ein Angreifer könnte diesen Schlüssel erlangen.

Ein weiteres Problem kann durch die begrenzten Ressourcen in der Hardware auftreten. Bitstreams (speziell mit sicherheitskritischer Funktionalität) werden üblicherweise verschlüsselt auf die Hardware übertragen und vor dem partiellen Rekonfigurieren auf der Hardware entschlüsselt. Dabei kann es passieren, dass zu wenig Speicher auf der Hardware vorhanden ist, um den gesamten entschlüsselten Bitstream zwischenzuspeichern. Somit muss dieser blockweise entschlüsselt werden und direkt zum Rekonfigurieren verwendet werden. Tritt nun ein Fehler beim Entschlüsseln weiterer Blöcke auf, sind die ersten Teile bereits (möglicherweise mit einem manipulierten Bitstream) rekonfiguriert und könnten andere Teile der Hardware manipulieren oder der neue unvollständige und somit fehlerhafte Hardware-Block hat mögliche Angriffsflächen.

Es besteht daher Bedarf die Authentizität und korrekte Funktionsweise einer neu geladenen Hardware-Applikation oder einer aktualisierten Hardware-Applikation sicherzustellen, bevor die Schnittstellen von und zu dieser App freigegeben werden.

### ZUSAMMENFASSUNG DER ERFINDUNG

Die Aufgabe der Erfindung besteht darin, eine Lösung zur Rekonfiguration einer Hardwarekomponente eines technischen Geräts anzugeben.

Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung.

Ein Aspekt der Erfindung besteht darin, während der Rekonfiguration einer Hardwarekomponente eines technischen Geräts, eine Firewall um ein rekonfigurierbares feldprogrammierbares Modul der Hardwarekomponente zu legen, wobei die Firewall Schnittstellen des Moduls zu weiteren Komponenten während der Rekonfiguration sperrt und nur nach Prüfung einer validen Rekonfiguration freigibt.

Die Erfindung beansprucht ein Verfahren zur Rekonfiguration einer Hardwarekomponente eines technischen Geräts, wobei die Hardwarekomponente mindestens ein rekonfigurierbares feldprogrammierbares Modul aufweist und wobei das Modul Schnittstellen zu weiteren Komponenten aufweist. Das Verfahren weist die folgenden Schritte auf:
- ein Sperren mindestens einer Schnittstelle durch eine Firewall,
- ein Rekonfigurieren des Moduls, wobei bei dem Rekonfigurieren eine Hardware-Applikation auf dem Modul installiert oder aktualisiert wird,
- ein Prüfen der Hardware-Applikation und
- in Abhängigkeit von Ergebnissen des Prüfens entweder ein Aufheben oder ein Beibehalten des Sperrens von mindestens einer Schnittstelle durch die Firewall.

Die Erfindung hat den Vorteil, dass die Rekonfiguration (zum Beispiel partielle Rekonfiguration) eines Moduls in einer durch die Firewall isolierten Region ausführbar ist und so Angriffe während der (partiellen) Rekonfiguration verhindert werden können.

Um sicherzustellen, dass ein rekonfigurierbarer Hardware-Teil / ein rekonfigurierbares feldprogrammierbares Modul erst nach vollständiger und korrekter (partieller) Rekonfiguration ansprechbar ist, wird in der Basis Konfiguration (Basis Bitstream) eine Firewall um jedes rekonfigurierbares feldprogrammierbares Modul (auch als PRR (Partial Reconfiguration Region) bezeichenbar) der Hardwarekomponente gelegt. Diese Firewall sperrt während der (partiellen) Rekonfiguration alle Schnittstellen zu weiteren Komponenten und gibt die Schnittstellen anschließend nur nach erfolgreicher Überprüfung der geladenen Applikation / App gezielt frei. Wird die geladene Applikation nicht erfolgreich überprüft, so werden die Schnittstellen nicht freigegeben.

Der Einsatz der Firewall um jedes rekonfigurierbares feldprogrammierbares Modul (auch als PRR (Partial Reconfiguration Region) bezeichenbar) hat den Vorteil, dass Schnittstellen erst nach einer erfolgreichen Validierung der neu geladenen Hardware-Applikation (zum Beispiel partielles FPGA Bitstream) oder nach einem Update der Hardware-Applikation freigegeben werden können. Dies ist nötig, da Hardware-Applikationen mit sicherheitskritischer Funktionalität bei nur teilweiser Rekonfiguration oder fehlerhafter / manipulierter Rekonfiguration oder Angriffe z.B. geheimes Schlüsselmaterial leaken könnten oder Schaden an anderen Teilen / Regionen anrichten könnten.

Somit hat ein Angreifer während und nach einer abgebrochenen Rekonfiguration oder nach einer Rekonfiguration mit einer kompromittierten Hardware-Applikation keine Möglichkeit mit der Applikation zu kommunizieren, um kritische Daten (z.B. Schlüsselmaterial) auszulesen. Zusätzlich hat somit auch eine schadhafte Konfiguration keine Möglichkeit andere Teile (Software, Peripherie, Hardware) negativ zu beeinflussen, zu manipulieren oder unberechtigterweise auszulesen.

Diese Art Firewall hat den Vorteil, dass sie vom Produkthersteller gebaut und konfiguriert werden kann. Dadurch hängt die Sicherheit von Angriffen auf die (partielle) Rekonfiguration nicht von den Herstellermechanismen des rekonfigurierbaren feldprogrammierbaren Modul (zum Beispiel ein FPGA) ab, sondern auch von Härtungsmaßnahmen des Produktherstellers. Der Produkthersteller programmiert rekonfigurierbare feldprogrammierbare Module (z.B. FPGAs) mit eigenen Algorithmen, um diese in Maschinen, Steuerungen und in sonstige Anwendungen zu betreiben.

Die Erfindung bietet somit den Vorteil, dass die Sicherheit gegen Angriffe auf die (partielle) Rekonfiguration auch von Produkthersteller-Mechanismen unabhängig gemacht wird und nicht nur einzig und allein von Herstellermechanismen des rekonfigurierbaren feldprogrammierbaren Modul (zum Beispiel ein FPGA) wie die Freeze-Logik, CRC Check bzw. Bitstream Authentifizierung und Verschlüsselung abhängig ist.

Hinzu kommt, dass die Firewall zur Sperrung bzw. Freischaltung von Funktionalitäten der Hardware-Applikation, auch während der Laufzeit verwendet werden kann wohingegen die Herstellermechanismen des rekonfigurierbaren feldprogrammierbaren Modul (zum Beispiel ein FPGA) nur zum Gerätestart angewandt werden können. Wenn ein Challenge-Response Verfahren eingesetzt ist, dann kann die Firewall auch dafür verwendet werden, um die Integrität bzw. Authentizität der Hardware-Applikation zur Laufzeit zu überprüfen.

Außerdem kann es auf Hardware mit eingeschränkten Ressourcen sein, dass die Validität einer Hardware-Applikation / eines Updates einer Hardware-Applikation erst nach vollständiger Rekonfiguration geprüft werden kann. Somit muss diese Hardware-Applikation zwangsläufig in einer isolierten Umgebung (zum Beispiel durch Firewall isoliert) geladen werden, bevor sie validiert werden kann. Dies wird durch die erfindungsmäßig eingesetzte Firewall sichergestellt, indem zum Beispiel nach der Rekonfiguration eine Prüfung / Authentifizierung der Hardware-App durchgeführt wird und erst nach erfolgreicher Prüfung weitere Schnittstellen freigegeben werden.

In einer weiteren Ausführung sind die weiteren Komponenten weitere rekonfigurierbare feldprogrammierbare Module der Hardwarekomponente, Softwarekomponenten des technischen Geräts, Applikationen einer zentralen Recheneinheit (CPU) des technischen Geräts, Peripherie innerhalb des technischen Geräts und/ oder weitere Teile der Hardwarekomponente.

In einer weiteren Ausführung wird das Prüfen der Hardware-Applikation durch die Firewall, durch eine weitere Hardwarekomponente (im Basis Bitstream) und/ oder durch eine zentrale Recheneinheit, die anschließend ein Steuersignal an die Firewall übermittelt durchgeführt.

In einer weiteren Ausführung beinhaltet das Prüfen eine Prüfung auf erfolgreich durchgeführte Rekonfiguration des Moduls.

In einer weiteren Ausführung beinhaltet das Prüfen eine Prüfung einer Authentizität der Hardware-Applikation. Die Authentizität beinhaltet eine korrekte Funktionsweise der neugeladenen Hardware-Applikation oder einer aktualisierten Hardware-Applikation und / oder eine Berechtigung dieser Hardware-Applikation auf diesem rekonfigurierbaren feldprogrammierbaren Modul zu laufen.

In einer weiteren Ausführung wird die Prüfung der Authentizität durch symmetrische kryptographische Verfahren (z.B. HMAC) und / oder asymmetrische kryptographische Verfahren (z.B. digitale Signatur) durchgeführt.

In einer weiteren Ausführung wird die Prüfung der Authentizität durch eine Prüfung eines Authentifizierungstags durchgeführt, welcher zum Beispiel am Ende des Bitstreams angehängt ist.
In einer weiteren Ausführung wird die Prüfung der Authentizität durch ein Challenge-Response Verfahren durchgeführt. In einer weiteren Ausführung findet das Challenge-Response Verfahren zwischen der Firewall (Basis Bitstream), einer weiteren Hardwarekomponente und / oder einer zentralen Recheneinheit auf der einen Seite und der rekonfigurierten Hardware-Applikation auf dem rekonfigurierbaren feldprogrammierbaren Modul (auch als PRR (Partial Reconfiguration Region) bezeichnet) auf der anderen Seite statt. In diesem Fall soll die Hardware-Applikation so gebaut werden, dass sie eine korrekte Antwort (Response) nur dann erstellen kann, wenn sie authentisch ist.

In einer weiteren Variante kann die Prüfung der Hardware-Applikation mit digitalen Signaturen erfolgen. Die Firewall könnte nach der (partiellen) Rekonfiguration eine für die Authentifizierung vorgesehene Schnittstelle für sich selbst freischalten, die Validität der neu geladenen oder aktualisierten Hardware-Applikation auf dem rekonfigurierbaren feldprogrammierbaren Modul mit einer digitalen Signaturberechnung überprüfen und bei erfolgreicher Validierung alle weiteren vorgesehenen Schnittstellen freigeben.

Die Firewall kann auch zur Laufzeit (nach der (partiellen) Rekonfiguration) dynamisch weitere spezifische Funktionalitäten oder weitere Schnittstellen der aktualisierten Hardware-Applikation in der PRR / auf dem rekonfigurierbaren feldprogrammierbaren Modul freischalten bzw. absperren.

In einer weiteren Ausführung ist die Hardwarekomponente ein Field Programmable Gate Array (FPGA), ein Application-Specific Integrated Circuit (ASIC) mit eingebettetem FPGA und / oder ein Complex Programmable Logic Device (CPLD).

In einer weiteren Ausführung wird in Abhängigkeit von Ergebnissen des Prüfens (zum Beispiel bei Feststellung eines Fehlers, einer nicht validen Rekonfiguration und / oder einer nicht erfolgreichen Überprüfung der Hardware-Applikation) ein Störsignal ausgegeben, ein Steuersignal an die Firewall gesendet, ein Log-Eintrag angelegt, Schlüsselmaterial gelöscht, sicherheitskritische Einheiten gesperrt und/ oder das Modul formatiert (komplett gelöscht). Diese Maßnahmen hängen stark von der spezifischen Anwendung ab.

Die Erfindung beansprucht außerdem eine Hardwarekomponente eines technischen Geräts, wobei die Hardwarekomponente mindestens ein rekonfigurierbares feldprogrammierbares Modul aufweist, wobei das Modul Schnittstellen zu weiteren Komponenten aufweist, wobei die Schnittstellen durch eine Firewall während einem Rekonfigurieren des Moduls sperrbar sind, wobei bei dem Rekonfigurieren eine Hardware-Applikation auf dem Modul installiert oder aktualisiert wird und wobei die Schnittstellen in Abhängigkeit von Ergebnissen eines Prüfens der Hardware-Applikation nach dem Rekonfigurieren durch die Firewall freischaltbar oder sperrbar sind.

In einer weiteren Ausführung ist an der Hardwarekomponente ein erfindungsgemäßes Verfahren zur Rekonfiguration durchführbar.

### KURZE BESCHREIBUNG DER ZEICHNUNGEN

Die Besonderheiten und Vorteile der Erfindung werden aus den nachfolgenden Erläuterungen mehrerer Ausführungsbeispiele anhand von schematischen Zeichnungen ersichtlich.

Es zeigen
- Fig. 1: ein Ablaufdiagramm eines Verfahrens zur Rekonfiguration einer Hardwarekomponente eines technischen Geräts und
- Fig. 2: ein rekonfigurierbares feldprogrammierbares Modul mit Schnittstellen zu weiteren Komponenten.

### DETAILLIERTE BESCHREIBUNG DER ERFINDUNG

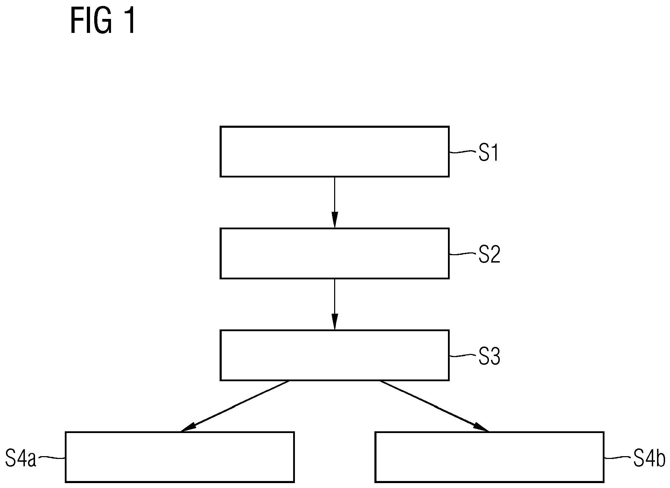

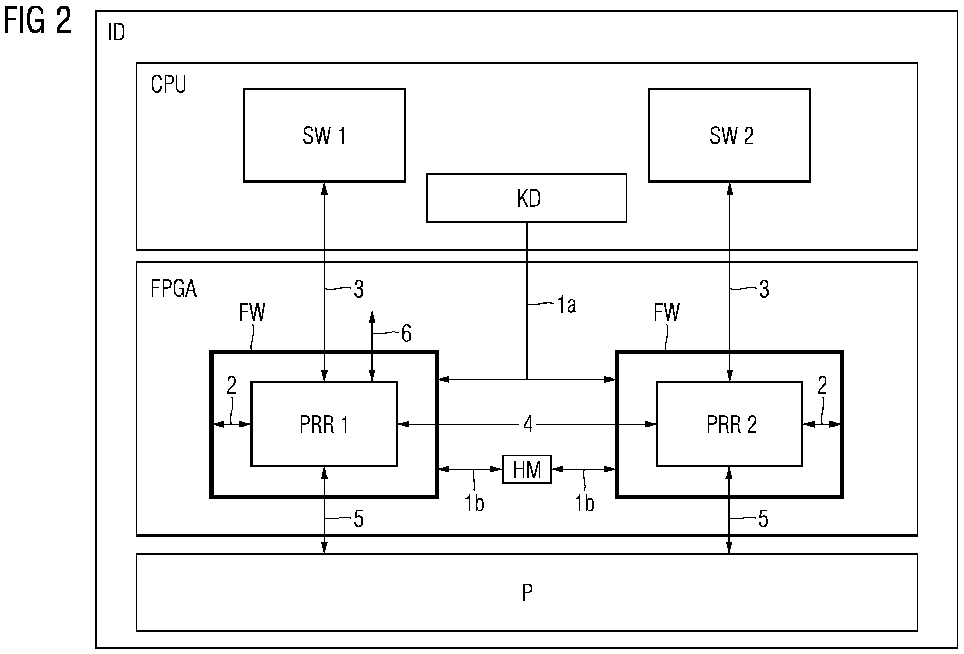

Fig. 1 zeigt ein Ablaufdiagramm eines Verfahrens zur Rekonfiguration einer Hardwarekomponente FPGA eines technischen Geräts ID, wobei die Hardwarekomponente FPGA mindestens ein rekonfigurierbares feldprogrammierbares Modul PRR1, PRR2 (dargestellt in Fig. 2) aufweist und wobei das Modul PRR1, PRR2 Schnittstellen 1a, 1b, 2, 3, 4, 5, 6 (dargestellt in Fig. 2) zu weiteren Komponenten aufweist.

Das Verfahren weist die folgenden Schritte auf:
- Erster Schritt S1: ein Sperren mindestens einer Schnittstelle 3, 4, 5, 6 durch eine Firewall FW (dargestellt in Fig. 2),
- Zweiter Schritt S2: ein Rekonfigurieren des Moduls PRR1, PRR2, wobei bei dem Rekonfigurieren eine Hardware-Applikation auf dem Modul PRR1, PRR2 installiert oder aktualisiert wird,
- Dritter Schritt S3: ein Prüfen der Hardware-Applikation (je nach Prüfverfahren durch Freischalten und Verwenden von Schnittstelle 2, dargestellt in Fig. 2) und
- in Abhängigkeit von Ergebnissen des Prüfens S3 entweder:
   - Variante a des vierten Schritts S4a: ein Aufheben oder
   - Variante b des vierten Schritts S4b: ein Beibehalten des Sperrens S1 von mindestens einer Schnittstelle 3, 4, 5, 6 durch die Firewall FW.

Fig. 2 zeigt beispielhaft ein mögliches Szenario mit zwei rekonfigurierbaren feldprogrammierbaren Modulen / partiell rekonfigurierbaren Regionen PRR1, PRR2, um welche jeweils eine Firewall FW gelegt wird. Außerdem sind die Schnittstellen 1a, 1b, 2, 3, 4, 5, 6 des rekonfigurierbaren feldprogrammierbaren Moduls PRR1, PRR2 zu weiteren Komponenten dargestellt. Dabei wird Schnittstelle 1a nur für die Ausführungsvariante benötigt, in der eine vertrauenswürdige Softwareinstanz (z.B. der Linux Kernel Treiber / Kernel Driver KD / zentralen Recheneinheit / CPU) die Prüfung der Rekonfiguration durchführt und die entsprechenden Steuersignale an die Firewall FW sendet. Alternativ zeigt Schnittstelle 1b die Ausführungsvariante, in der eine weitere Hardwarekomponente (Basis Bitstream) die Prüfung der Rekonfiguration durchführt und die entsprechenden Steuersignale an die Firewall FW sendet. Schnittstelle 2 (Schnittstelle zwischen rekonfigurierbaren feldprogrammierbaren Modulen PRR1, PRR2 und der Firewall FW) kann bei Bedarf für die Prüfung der Rekonfiguration hinzugezogen werden, wenn das verwendete Prüfverfahren eine Kommunikation mit der zu prüfenden Komponente voraussetzt (z.B. Challenge-Response Verfahren).

Während der (partiellen) Rekonfiguration von solch einem Modul PRR1, PRR2 (z.B. aufgrund eines Updates) werden alle Schnittstellen innerhalb der Firewall FW 2, 3, 4, 5, 6, wie von der Freeze Logik vorgesehen bzw. vordefiniert, auf einen festen Wert gelegt / gesperrt.

Schnittstellen 2, 3, 4, 5, 6 können beispielsweise von dem rekonfigurierbaren feldprogrammierbaren Module / der partiell rekonfigurierbaren Region PRR1, PRR2 zu einer Softwarekomponente SW1, SW2 (Schnittstelle 3) des technischen Geräts ID, von einem Modul PRR1, PRR2 zu einem anderen Modul PRR1, PRR2 (Schnittstelle 4) der Hardwarekomponente FPGA, von einem Modul PRR1, PRR2 zu Peripherie P (Schnittstelle 5) innerhalb des technischen Geräts ID oder von einem Modul PRR1, PRR2 zu Hardware-Teilen der Basis Konfiguration innerhalb der Hardware-Komponente FPGA (Schnittstelle 6) sein. Schnittstelle 2 gibt die Schnittstelle zwischen dem rekonfigurierbaren feldprogrammierbaren Module / der partiell rekonfigurierbaren Region PRR1, PRR2 und der Firewall FW an. Schnittstelle 1a gibt die Schnittstelle zwischen der Firewall FW und der Applikation einer zentralen Recheneinheit KD des technischen Geräts ID an, Schnittstelle 1b die Schnittstelle zwischen der Firewall FW und einer weiteren Hardware-Komponente (im Basisbitstream).

Die Steuerung der Firewall FW kann anwendungsspezifisch unterschiedlich gestaltet werden.

In Fig. 2 sind zwei Varianten des Prüfens (S3) der Rekonfiguration dargestellt. Eine vertrauenswürdige Softwareinstanz (z.B. der Linux Kernel Treiber / Kernel Driver KD / zentralen Recheneinheit / CPU, in Fig. 2 verbunden über Schnittstelle 1a) könnte nach korrektem Laden eines Updates bzw. nach korrekter und vollständiger Rekonfiguration eines rekonfigurierbaren feldprogrammierbaren Modules / einer partiell rekonfigurierbaren Region PRR1, PRR2 und dessen erfolgreicher Überprüfung ein Steuersignal zur Freischaltung der Schnittstellen 3, 4, 5, 6 geben. Alternativ kann diese Aufgabe direkt von einer weiteren Hardware-Komponente (im Basis Bitstream, in Fig. 2 verbunden über Schnittstelle 1b), oder von der Firewall selbst übernommen werden. Zur Prüfung der Rekonfiguration kann je nach Prüfverfahren Schnittstelle 2 freigeschalten und verwendet werden.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

### Bezugszeichenliste

- 1a, 1b, 2, 3, 4, 5, 6: Schnittstelle
- FPGA: Hardwarekomponente
- FW: Firewall
- ID: technisches Gerät
- KD: zentrale Recheneinheit
- HM: Hardware Modul
- P: Peripherie
- PRR1, PRR2: rekonfigurierbares feldprogrammierbares Modul
- S1: erster Schritt - Sperren
- S2: zweiter Schritt - Rekonfigurieren
- S3: dritter Schritt - Prüfen
- S4a: Variante a des vierten Schritts - Aufheben des Sperrens
- S4b: Variante b des vierten Schritts - Beibehalten des Sperrens
- SW1, SW2: Softwarekomponente

## Patentansprüche

1. Verfahren zur Rekonfiguration einer Hardwarekomponente (FPGA) eines technischen Geräts (ID),
wobei die Hardwarekomponente (FPGA) mindestens ein rekonfigurierbares feldprogrammierbares Modul (PRR1, PRR2) aufweist,
wobei das Modul (PRR1, PRR2) Schnittstellen (1a, 1b, 2, 3, 4, 5, 6) zu weiteren Komponenten aufweist,
mit den Schritten:
- ein Sperren (S1) mindestens einer Schnittstelle (3, 4, 5, 6) durch eine Firewall (FW),
- ein Rekonfigurieren (S2) des Moduls (PRR1, PRR2), wobei bei dem Rekonfigurieren (S2) eine Hardware-Applikation auf dem Modul (PRR1, PRR2) installiert oder aktualisiert wird,
- ein Prüfen (S3) der Hardware-Applikation und
- in Abhängigkeit von Ergebnissen des Prüfens (S3) entweder ein Aufheben (S4a) oder ein Beibehalten (S4b) des Sperrens (S1) von mindestens einer Schnittstelle (3, 4, 5, 6) durch die Firewall (FW).

2. Verfahren nach Anspruch 1,
wobei die weiteren Komponenten weitere rekonfigurierbare feldprogrammierbare Module (PRR1, PRR2) der Hardwarekomponente (FPGA), Softwarekomponenten (SW1, SW2) des technischen Geräts (ID), Applikationen einer zentralen Recheneinheit (KD) des technischen Geräts (ID), Peripherie (P) innerhalb des technischen Geräts (ID) und/ oder weitere Teile der Hardwarekomponente (FPGA) sind.

3. Verfahren nach einem der vorhergehenden Ansprüche,
wobei das Prüfen (S3) der Hardware-Applikation durch die Firewall (FW), durch eine weitere Hardwarekomponente (HM) und/ oder durch eine zentrale Recheneinheit (KD), die anschließend ein Steuersignal an die Firewall (FW) übermittelt durchgeführt wird.

4. Verfahren nach einem der vorhergehenden Ansprüche,
wobei das Prüfen (S3) eine Prüfung auf erfolgreich durchgeführte Rekonfiguration des Moduls (PRR1, PRR2) beinhaltet.

5. Verfahren nach einem der vorhergehenden Ansprüche,
wobei das Prüfen (S3) eine Prüfung einer Authentizität der Hardware-Applikation beinhaltet.

6. Verfahren nach Anspruch 5,
wobei die Prüfung der Authentizität durch symmetrische kryptographische Verfahren und / oder asymmetrische kryptographische Verfahren durchgeführt wird.

7. Verfahren nach Anspruch 5,
wobei die Prüfung der Authentizität durch eine Prüfung eines Authentifizierungstags durchgeführt wird.

8. Verfahren nach Anspruch 5,
wobei die Prüfung der Authentizität durch ein Challenge-Response Verfahren durchgeführt wird.

9. Verfahren nach Anspruch 8,
wobei das Challenge-Response Verfahren zwischen:
- der Firewall (FW), einer weiteren Hardwarekomponente (HM) und / oder einer zentralen Recheneinheit (KD) und
- der Hardware-Applikation
stattfindet.

10. Verfahren nach einem der vorhergehenden Ansprüche,
wobei die Hardwarekomponente ein Field Programmable Gate Array (FPGA), ein Application-Specific Integrated Circuit (ASIC) mit eingebettetem FPGA und / oder ein Complex Programmable Logic Device (CPLD) ist.

11. Verfahren nach einem der vorhergehenden Ansprüche,
wobei in Abhängigkeit von Ergebnissen des Prüfens (S3) ein Störsignal ausgegeben wird, ein Steuersignal gesendet wird, ein Log-Eintrag angelegt wird, Schlüsselmaterial gelöscht wird, sicherheitskritische Einheiten gesperrt werden und/ oder das Modul (PRR1, PRR2) formatiert wird.

12. Hardwarekomponente (FPGA) eines technischen Geräts (ID),
wobei die Hardwarekomponente (FPGA) mindestens ein rekonfigurierbares feldprogrammierbares Modul (PRR1, PRR2) aufweist,
wobei das Modul (PRR1, PRR2) Schnittstellen (2, 3, 4, 5, 6) zu weiteren Komponenten aufweist,
wobei die Schnittstellen (2, 3, 4, 5, 6) durch eine Firewall (FW) während einem Rekonfigurieren (S2) des Moduls (PRR1, PRR2) sperrbar (S1) sind, wobei bei dem Rekonfigurieren (S2) eine Hardware-Applikation auf dem Modul (PRR1, PRR2) installiert oder aktualisiert wird,
wobei die Schnittstellen (3, 4, 5, 6) in Abhängigkeit von Ergebnissen eines Prüfens (S3) der Hardware-Applikation nach dem Rekonfigurieren (S3) durch die Firewall freischaltbar (S4a) oder sperrbar (S4b) sind.

13. Hardwarekomponente (FPGA) nach Anspruch 12, an der ein Verfahren zur Rekonfiguration nach einem der Ansprüche 1 bis 11 durchführbar ist.
